# EUROPÄISCHE PATENTSCHRIFT

(11) **EP 4 355 510 B1**
(45) Veröffentlichungstag und Bekanntmachung des Hinweises auf die Patenterteilung: **20.11.2024**
(21) Anmeldenummer: 23755321.9
(22) Anmeldetag: 14.08.2023
(51) Int. Cl.: B21J 9/02, B21K 27/06, B23D 33/00, B23D 23/00

(54) **UMFORMMASCHINE MIT EINER SCHERVORRICHTUNG UND VERFAHREN ZUM ABSCHEREN EINES STANGENABSCHNITTS**
FORMING MACHINE WITH A SHEARING DEVICE AND METHOD FOR SHEARING OFF A SECTION OF ROD
MACHINE DE FORMAGE DOTÉE D'UN DISPOSITIF DE CISAILLEMENT ET PROCÉDÉ POUR TAILLER UNE SECTION DE TIGE

(30) Priorität: 16.08.2022 CH 9672022
(43) Veröffentlichungstag der Anmeldung: 24.04.2024
(73) Patentinhaber: Hatebur Umformmaschinen AG, 4153 Reinach (CH)
(72) Erfinder: VOLONTÉ, Marco, 4208 Nunningen (CH)
(74) Vertreter: Bohest AG
(86) Internationale Anmeldenummer: PCT/CH2023/050028
(87) Internationale Veröffentlichungsnummer: WO 2024/036417

(56) Entgegenhaltungen:
- CH-A- 431 376
- DE-A1- 2 436 141
- DE-A1- 2 549 546
- DE-A1- 2 700 461
- DE-A1- 2 940 375
- DE-C- 733 052
- US-A- 3 264 853

## Beschreibung

Die vorliegende Erfindung betrifft eine Umformmaschine mit einer Umformstation und mit einer Schervorrichtung zum Abscheren eines Stangenabschnitts von einem Stangenmaterial gemäss dem Oberbegriff des unabhängigen Patentanspruchs 1 sowie ein Verfahren zum Abscheren eines Stangenabschnitts von einem Stangenmaterial gemäss dem Oberbegriff des unabhängigen Patentanspruchs 10.

Aus dem Stand der Technik sind mehrstufige Umformmaschinen mit mehreren nacheinander angeordneten Umformstationen bekannt, die eine Schervorrichtung zum Abscheren eines Stangenabschnitts von einem Stangenmaterial aufweisen. Unter diesen Umformmaschinen gibt es unter anderem solche, deren Schervorrichtung nicht nur zum Abscheren des Stangenabschnitts vom Stangenmaterial dient, sondern auch zum Zuführen des abgescherten Stangenabschnitts zu einer ersten Umformstation. In der DE 29 40 375 C2 ist eine solche Umformmaschine offenbart, bei der die Schervorrichtung einen vorwärts und rückwärts bewegbaren Scherschlitten und ein am Scherschlitten befestigtes Schermesser umfasst. Mit dem Schermesser ist in einer Vorwärtsbewegung des Scherschlittens der Stangenabschnitt zunächst vom Stangenmaterial abscherbar und dann zur ersten Umformstation zuführbar. Der Scherschlitten wird von einer Doppelkurve über einen doppelten Rollenhebel angetrieben. Eine Einstellung der Positionierung des abgescherten Stangenabschnitts bei der ersten Umformstation ist damit nicht möglich, insbesondere nicht im laufenden Betrieb ohne Maschinenstopp. Dies ist deswegen nachteilhaft, weil der abgescherte Stangenabschnitt aufgrund des Scherens üblicherweise eine ungleichförmige Geometrie aufweist und der Massenschwerpunkt nicht immer in einer Rotationsachse liegt. Um in der ersten Umformstation eine optimale Volumenverteilung zu erhalten, sollte der abgescherte Stangenabschnitt daher bei der ersten Umformstation möglichst optimal positioniert werden. Dies könnte beispielsweise durch eine Einstellung der Positionierung mittels Einstellplatten und Stellschrauben erfolgen, was allerdings einen längeren Maschinenstopp zur Folge hat. Dies ist umso problematischer, als die Einstellprozedur teilweise mehrmals wiederholt werden muss, bis die Volumenverteilung in der ersten Umformstation gleichmässig ist.

Vor diesem Hintergrund liegt der Erfindung die Aufgabe zugrunde, eine Umformmaschine mit einer Umformstation und mit einer Schervorrichtung und ein Verfahren zum Abscheren eines Stangenabschnitts von einem Stangenmaterial der eingangs erwähnten Art zu schaffen, die es ermöglichen, die Position eines von einem Stangenmaterial abgescherten und zur Umformstation zugeführten Stangenabschnitts bei der Umformstation auf einfache Art und Weise und möglichst ohne vollständigen Maschinenstopp optimal einzustellen.

Diese Aufgabe wird durch die erfindungsgemässe Umformmaschine und das erfindungsgemässe Verfahren zum Abscheren eines Stangenabschnitts gelöst, wie sie in den unabhängigen Patentansprüchen 1 und 10 definiert sind. Besonders vorteilhafte Weiterbildungen und Ausgestaltungen ergeben sich aus den abhängigen Patentansprüchen.

Das Wesen der Erfindung besteht bezüglich der Umformmaschine im Folgenden: Eine Umformmaschine weist eine Umformstation und eine Schervorrichtung zum Abscheren eines Stangenabschnitts von einem Stangenmaterial und Zuführen des abgescherten Stangenabschnitts zur Umformstation auf. Die Schervorrichtung umfasst einen vorwärts und rückwärts bewegbaren Scherschlitten und ein am Scherschlitten befestigtes Schermesser. Mit dem Schermesser ist in einer Vorwärtsbewegung des Scherschlittens der Stangenabschnitt vom Stangenmaterial abscherbar und zur Umformstation zuführbar. Die Schervorrichtung umfasst Mittel zur Verstellung des Hubs und der Richtung der Vorwärtsbewegung des Scherschlittens.

Unter "Stangenmaterial" wird im vorliegenden Zusammenhang jede Materialform mit ausgeprägter Längserstreckung und beliebigem, über die Längserstreckung üblicherweise konstantem Querschnitt verstanden. Insbesondere fallen metallische Stäbe, Stangen und Drähte jeglicher Abmessungen unter diese Definition. Kreisrunde Querschnitte sind die Regel, die Erfindung ist aber nicht darauf beschränkt. Das Stangenmaterial kann sich entlang einer Gerade erstrecken oder auch aufgerollt sein.

"Vorwärts und rückwärts bewegbar" umfasst Bewegungen in horizontaler, vertikaler oder schräger Raumrichtung.

Dadurch, dass die Schervorrichtung Mittel zur Verstellung des Hubs und der Richtung der Vorwärtsbewegung des Scherschlittens umfasst, ist es möglich, die Position eines von einem Stangenmaterial abgescherten und zur Umformstation zugeführten Stangenabschnitts bei der Umformstation auf einfache Art und Weise optimal einzustellen. Dies führt im Vergleich zum Stand der Technik zu einem deutlichen Zeitgewinn und zu einer Verringerung der Maschinenstillstandzeiten.

Mit Vorteil sind die Mittel zur Verstellung des Hubs und der Richtung der Vorwärtsbewegung des Scherschlittens so ausgebildet sind, dass sie eine Verstellung des Hubs und der Richtung der Vorwärtsbewegung des Scherschlittens im laufenden Betrieb der Umformmaschine ermöglichen, wobei die Umformmaschine vorzugsweise eine Steuereinheit zur Steuerung der Mittel zur Verstellung des Hubs und der Richtung der Vorwärtsbewegung des Scherschlittens umfasst.

Durch die Möglichkeit der Verstellung des Hubs und der Richtung der Vorwärtsbewegung des Scherschlittens im laufenden Betrieb der Umformmaschine kann bei der Einstellung der Positionierung des abgescherten Stangenabschnitts bei der Umformstation ein vollständiger Maschinenstopp vermieden werden. Dies führt im Vergleich zum Stand der Technik zu einem deutlichen Zeitgewinn und zu einer Verringerung der Maschinenstillstandzeiten.

Eine Steuereinheit zur Steuerung der Mittel zur Verstellung des Hubs und der Richtung der Vorwärtsbewegung des Scherschlittens ermöglicht eine einfache Bedienung dieser Mittel sowie gewünschtenfalls eine Automatisierung.

Vorteilhafterweise umfasst die Schervorrichtung einen im Hub variablen Scherschlittenantrieb, mit dem der Scherschlitten vorwärts und rückwärts bewegbar ist. Mit einem solchen Scherschlittenantrieb kann die Verstellung des Hubs der Vorwärtsbewegung des Scherschlittens auf einfache Weise realisiert werden.

Der Scherschlittenantrieb ist vorzugsweise unabhängig vom Antrieb der Umformwerkzeuge in der genannten Umformstation und allfälligen weiteren Umformstationen der Umformmaschine.

Bevorzugt umfasst der Scherschlittenantrieb einen Hydraulikzylinder und einen darin verschiebbaren Kolben, wobei der Kolben über eine Kolbenstange mit dem Scherschlitten verbunden ist. Mit einem solchen Scherschlittenantrieb ist ein variabler, durch eine Steuereinheit steuerbarer Hub einfach realisierbar.

Mit Vorteil ist zur Verstellung der Richtung der Vorwärtsbewegung des Scherschlittens der Scherschlitten um eine Schwenkachse schwenkbar. Ein Schwenken des Scherschlittens ermöglicht eine einfache Bewegungsrichtungsverstellung.

Vorzugsweise ist der Scherschlitten quer zu einer Längsrichtung des Stangenabschnitts vorwärts und rückwärts bewegbar und verläuft die Schwenkachse parallel zur Längsrichtung des Stangenabschnitts.

Dass der Scherschlitten quer zu einer Längsrichtung des Stangenabschnitts vorwärts und rückwärts bewegbar ist, ermöglicht in einer Vorwärtsbewegung des Scherschlittens ein gerades Abscheren des Stangenabschnitts vom Stangenmaterial quer zur Längsrichtung des Stangenabschnitts und danach ein Zuführen des abgescherten Stangenabschnitts zur Umformstation im selben Zug.

Das Verlaufen der Schwenkachse des Scherschlittens parallel zur Längsrichtung des Stangenabschnitts ermöglicht eine Verstellung der Positionierung des abgescherten Stangenabschnitts bei der Umformstation in einer Ebene senkrecht zur Schwenkachse des Scherschlittens und zur Längsrichtung des Stangenabschnitts. Zusammen mit dem variablen Hub des Scherschlittens erlaubt dies eine gezielte Positionierung des abgescherten Stangenabschnitts bei der Umformstation in dieser Ebene.

Vorteilhafterweise ist der Scherschlitten in einem Scherschlittenlager geführt, das mindestens teilweise um die Schwenkachse schwenkbar ist. Das Schwenken des Scherschlittens und damit die Verstellung der Richtung der Vorwärtsbewegung des Scherschlittens kann so über das Scherschlittenlager veranlasst werden.

Bevorzugt umfassen die Mittel zur Verstellung des Hubs und der Richtung der Vorwärtsbewegung des Scherschlittens eine Schwenkwinkel-Verstelleinrichtung, die dezentral am Scherschlittenlager ansetzt und bei Verstellung einen Schwenkwinkel des Scherschlittenlagers verstellt, wobei die Schwenkwinkel-Verstelleinrichtung vorzugsweise einen Exzenter umfasst. Eine solche Schwenkwinkel-Verstelleinrichtung ermöglicht auf einfache Art eine Verstellung des Schwenkwinkels des Scherschlittenlagers und damit der Richtung der Vorwärtsbewegung des Scherschlittens.

Bei einer bevorzugten Ausführungsvariante ist das Scherschlittenlager über mindestens ein elastisch deformierbares Verbindungsteil mit mindestens einem ortsfesten Befestigungsteil verbunden. Auf diese Weise kann der Wartungsaufwand reduziert werden, da kein wartungsintensives Scharnier benötigt wird.

Bezüglich des Verfahrens besteht das Wesen der Erfindung im Folgenden:
Bei einem Verfahren zum Abscheren eines Stangenabschnitts von einem Stangenmaterial und Zuführen des abgescherten Stangenabschnitts zu einer Umformstation einer Umformmaschine umfasst eine Schervorrichtung einen vorwärts und rückwärts bewegbaren Scherschlitten und ein am Scherschlitten befestigtes Schermesser. Mittels der Schervorrichtung schert das Schermesser in einer Vorwärtsbewegung des Scherschlittens den Stangenabschnitt vom Stangenmaterial ab und führt diesen zur Umformstation zu. Zur Positionierung des abgescherten Stangenabschnitts bei der Umformstation werden der Hub und die Richtung der Vorwärtsbewegung des Scherschlittens eingestellt.

Die Einstellung des Hubs und der Richtung der Vorwärtsbewegung des Scherschlittens ermöglicht es, die Position eines von einem Stangenmaterial abgescherten und zur Umformstation zugeführten Stangenabschnitts bei der Umformstation auf einfache Art und Weise optimal einzustellen. Dies führt im Vergleich zum Stand der Technik zu einem deutlichen Zeitgewinn und zu einer Verringerung der Maschinenstillstandzeiten.

Im Folgenden werden die erfindungsgemässe Umformmaschine und das erfindungsgemässe Verfahren zum Abscheren eines Stangenabschnitts anhand eines in den Zeichnungen dargestellten Ausführungsbeispiels detaillierter beschrieben. Es zeigen:
- Fig. 1 -: eine teilweise geschnittene und teilweise schematische Perspektivansicht eines Teils einer erfindungsgemässen Umformmaschine mit einer Schervorrichtung beim Abscheren eines Stangenabschnitts von einem Stangenmaterial;
- Fig. 2 -: eine teilweise geschnittene Seitenansicht des Umformmaschinenteils und Stangenabschnitts von Fig. 1 ohne teilweise weggelassene Maschinenteile, dafür zusätzlich mit vergrösserten Detailansichten;
- Fig. 3 -: eine Perspektivansicht der Schervorrichtung der Umformmaschine von Fig. 1 mit abgeschertem Stangenabschnitt;
- Fig. 4 -: die Schervorrichtung mit abgeschertem Stangenabschnitt von Fig. 3 in einer Seitenansicht von einer ersten Umformstation der Umformmaschine her gesehen;
- Fig. 5 -: eine Perspektivansicht eines Scherschlittenlagers der Schervorrichtung von Fig. 3;
- Fig. 6 -: eine Ansicht des Scherschlittenlagers von Fig. 5 aus einer anderen Perspektive;
- Fig. 7 -: eine teilweise geschnittene Perspektivansicht des Umformmaschinenteils und Stangenabschnitts von Fig. 1 ohne rein schematisch gezeichnete Teile, aber mit bei der ersten Umformstation zentral positioniertem abgeschertem Stangenabschnitt;
- Fig. 8 -: eine teilweise geschnittene Seitenansicht des Umformmaschinenteils und Stangenabschnitts von Fig. 7 ohne teilweise weggelassene Maschinenteile, dafür zusätzlich mit vergrösserten Detailansichten;
- Fig. 9 -: eine teilweise geschnittene Perspektivansicht des Umformmaschinenteils und Stangenabschnitts von Fig. 7, aber mit bei der ersten Umformstation nach rechts oben versetzt positioniertem abgeschertem Stangenabschnitt;
- Fig. 10 -: eine teilweise geschnittene Seitenansicht des Umformmaschinenteils und Stangenabschnitts von Fig. 9 ohne teilweise weggelassene Maschinenteile, dafür zusätzlich mit vergrösserten Detailansichten;
- Fig. 11 -: eine teilweise geschnittene Perspektivansicht des Umformmaschinenteils und Stangenabschnitts von Fig. 7, aber mit bei der ersten Umformstation nach links unten versetzt positioniertem abgeschertem Stangenabschnitt; und
- Fig. 12 -: eine teilweise geschnittene Seitenansicht des Umformmaschinenteils und Stangenabschnitts von Fig. 11 ohne teilweise weggelassene Maschinenteile, dafür zusätzlich mit vergrösserten Detailansichten.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

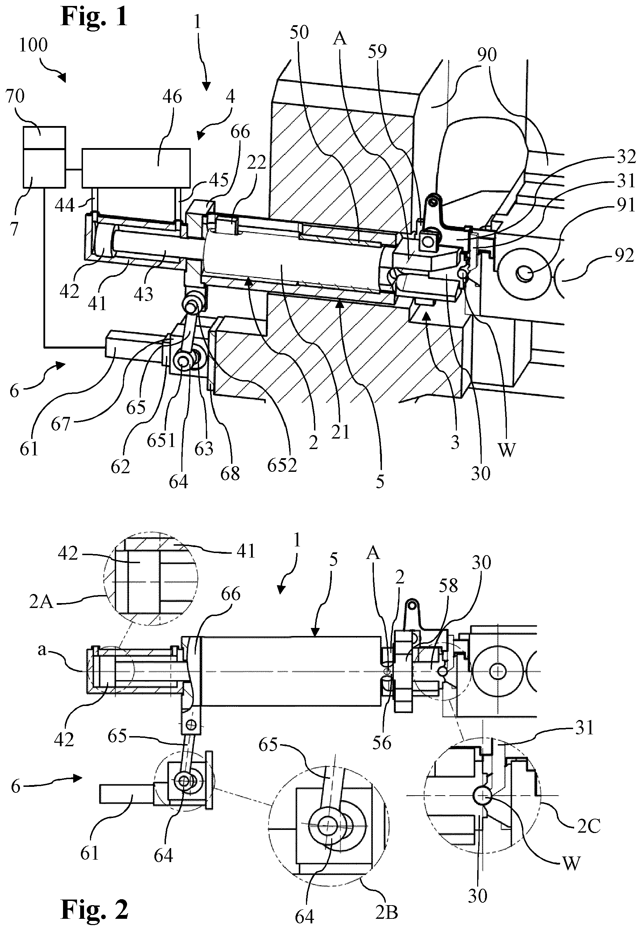

Fig. 1 zeigt einen Teil eines Ausführungsbeispiels einer erfindungsgemässen, im vorliegenden Fall mehrstufigen Umformmaschine 100 in einer teilweise geschnittenen und teilweise schematischen Perspektivansicht. Die Umformmaschine 100 umfasst einen Maschinenkörper 90, in dem in bekannter Art mehrere aufeinanderfolgende Umformstationen 91, 92, etc. zur stufenweisen Umformung eines Werkstücks angeordnet sind. Von den aufeinanderfolgenden Umformstationen sind in Fig. 1 nur der matrizenseitige Teil der ersten Umformstation 91 und ein Teil des matrizenseitigen Teils der Umformstation 92 sichtbar.

Die Umformmaschine 100 umfasst des Weiteren eine ebenfalls am Maschinenkörper 90 befestigte Schervorrichtung 1, mit welcher das in der ersten Umformstation 91 umzuformende Werkstück in Form eines Stangenabschnitts W von einem Stangenmaterial abscherbar und zur ersten Umformstation 91 zuführbar ist. Das Stangenmaterial besteht hier aus einer metallischen Stange, die sich vom in Fig. 1 sichtbaren Stangenabschnitt W schräg nach hinten erstreckt, aber bis auf den Stangenabschnitt W durch Maschinenteile der Umformmaschine vollständig verdeckt ist.

Die Schervorrichtung 1 umfasst ein Scherschlittenlager 5, das sich durch eine zylindrische Öffnung des Maschinenkörpers 90 erstreckt, und in dem ein Scherschlitten 2 in Längsrichtung vorwärts und rückwärts bewegbar gelagert ist. In einem Teilbereich des Scherschlittenlagers 5 ist zwischen Scherschlitten 2 und Scherschlittenlager 5 eine Gleitbüchse 50 angeordnet, die den Scherschlitten 2 gut gleitbar lagert.

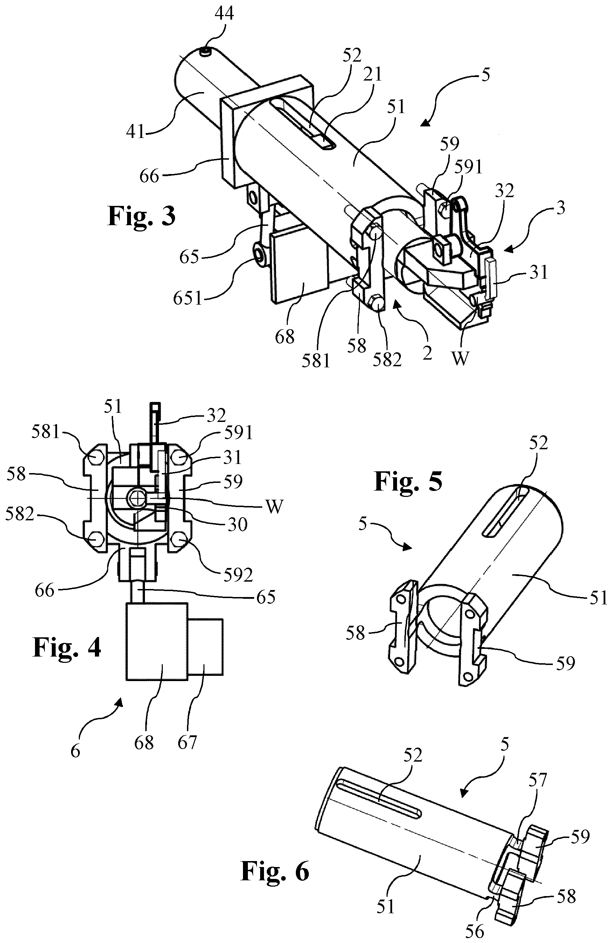

Wie am besten aus den Figuren 5 und 6 ersichtlich, weist das Scherschlittenlager 5 einen hohlzylindrischen Grundkörper 51 auf, der auf der Oberseite mit einem in Längsrichtung verlaufenden Schlitz 52 versehen ist. Der hohlzylindrische Grundkörper 51 ist über zwei Verbindungsteile 56 bzw. 57 mit zwei Befestigungsteilen 58 bzw. 59 verbunden. Der hohlzylindrische Grundkörper 51, die beiden Verbindungsteile 56, 57 und die beiden Befestigungsteile 58, 59 sind einstückig ausgebildet. Das Scherschlittenlager 5 ist über die beiden Befestigungsteile 58, 59 mittels Schrauben 581, 582, 591, 592 an den Maschinenkörper 90 angeschraubt, siehe insbesondere Figuren 1, 3, 4 und 7, und so auf der einen Seite fixiert und ortsfest. Der hohlzylindrische Grundkörper 51 ist gegenüber diesem ortsfesten Teil des Scherschlittenlagers 5 um einen kleinen Winkel schwenkbar. Wie in den Figuren 1 und 2 dargestellt, verläuft die Schwenkachse A dabei durch die relativ dünnen Verbindungsteile 56, 57, die elastisch deformierbar sind. Aufgrund der elastischen Deformierbarkeit wird kein wartungsintensives Scharnier benötigt.

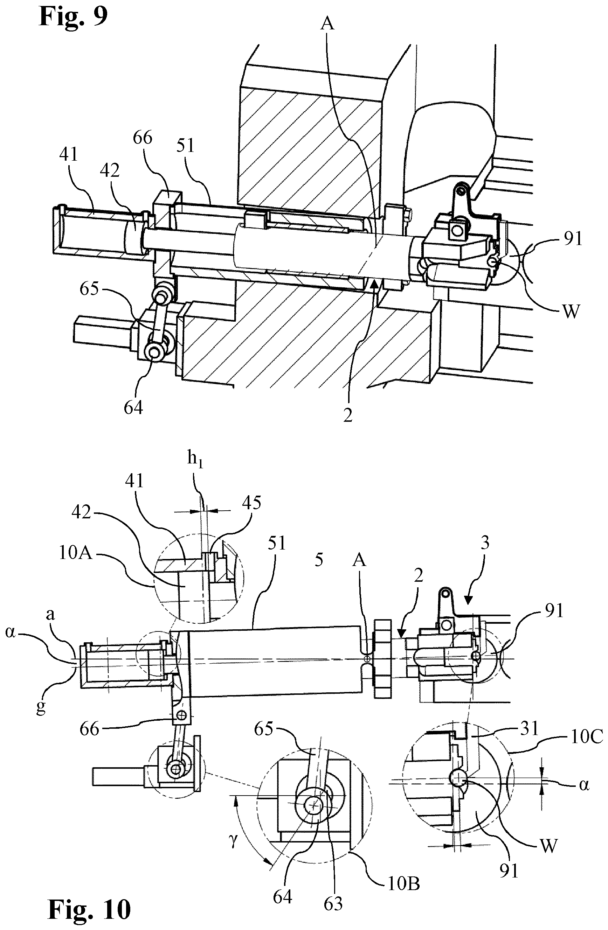

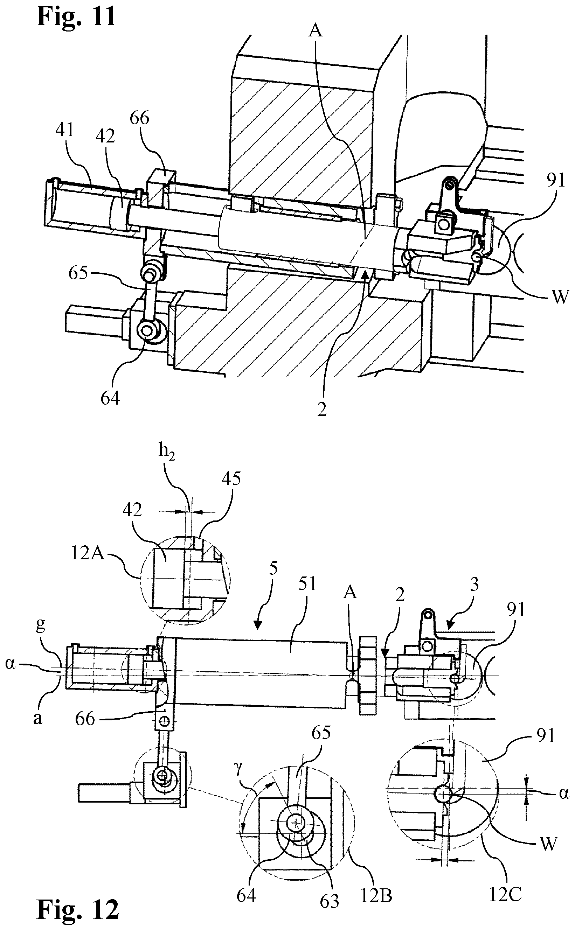

Zur Schwenkung des hohlzylindrischen Grundkörpers 51 um die Schwenkachse A weist die Schervorrichtung 1 eine Schwenkwinkel-Verstelleinrichtung 6 auf. Wie insbesondere aus den Figuren 1 bis 4 ersichtlich, umfasst die Schwenkwinkel-Verstelleinrichtung 6 einen Servomotor 61, mit dem über ein Getriebe 62, insbesondere ein Schneckengetriebe, eine Antriebswelle 63 mit einer Exzenterscheibe 64 drehbar ist. Die Antriebswelle 63 ist in einem Gehäuse 67 angeordnet, das über eine Befestigungsplatte 68 am Maschinenkörper 90 befestigt ist. Ein Exzenterarm 65 ist mit einem Exzenterarmende 651 mit der Exzenterscheibe 64 verbunden und mit seinem anderen Exzenterarmende 652 an einen Verstellkragen 66 angelenkt, der mit einem Endbereich des hohlzylindrischen Grundkörpers 51 des Scherschlittenlagers 5 verbunden und um dieses herum angeordnet ist. Die Antriebswelle 63, die Exzenterscheibe 64 und der Exzenterarm 65 bilden zusammen einen Exzenter. Durch Drehen der Welle 63 mit der Exzenterscheibe 64 wird der am Exzenterarmende 651 mit der Exzenterscheibe 64 verbundene Exzenterarm 65 verstellt und verstellt so seinerseits translatorisch den mit dem Scherschlittenlager 5 verbundenen Verstellkragen 66, wodurch der damit verbundene Endbereich des hohlzylindrischen Grundkörpers 51 des Scherschlittenlagers 5 angehoben oder abgesenkt wird. Dies führt zu einer Schwenkung des hohlzylindrischen Grundkörpers 51 um die Schwenkachse A bzw. eine Verstellung des in den Figuren 10 und 12 eingezeichneten Schwenkwinkels α des Scherschlittenlagers 5 bzw. des hohlzylindrischen Grundkörpers 51 des Scherschlittenlagers 5.

Bezugnehmend auf Fig. 10 kann der Schwenkwinkel α definiert werden als der Winkel zwischen der Längsrichtung g des hohlzylindrischen Grundkörpers 51 des Scherschlittenlagers 5 im um die Schwenkachse A geschwenkten Zustand und der Längsrichtung a des hohlzylindrischen Grundkörpers 51 des Scherschlittenlagers 5 im gegenüber dem ortsfesten Teil des Scherschlittenlagers 5 ungeschwenkten Zustand. In Fig. 10 ist die eingezeichnete Längsrichtung g die Mittelachse des hohlzylindrischen Grundkörpers 51 des Scherschlittenlagers 5. Der ungeschwenkte Zustand des hohlzylindrischen Grundkörpers 51 des Scherschlittenlagers 5 ist in Fig. 2 dargestellt. Die dort eingezeichnete Längsrichtung a entspricht dort der Mittelachse des hohlzylindrischen Grundkörpers 51 des Scherschlittenlagers 5.

Der Schwenkwinkel α ist in einem Bereich von -20° bis 20° verstellbar. Vorzugsweise wird die Umformmaschine so dimensioniert, dass ein Verstellbereich von -10° bis 10°, noch bevorzugter -5° bis 5°, ausreicht.

Wie am besten aus den Figuren 1, 3 und 4 ersichtlich, weist der im Scherschlittenlager 5 gelagerte Scherschlitten 2 einen zylindrischen Grundkörper 21 auf, von dem aus sich eine Nase 22 nach oben wegerstreckt. Die Nase 22 greift in den Schlitz 52 des hohlzylindrischen Grundkörpers 51 des Scherschlittenlagers 5 ein und bildet so zusammen mit diesem eine Verdrehsicherung.

Auf der der ersten Umformstation 91 zugewandten Seite des Scherschlittens 2 ist an diesem ein Scherkopf 3 befestigt, der ein Schermesser 30 aufweist, das an der der ersten Umformstation 91 zugewandten Seite offen ist und am Stangenabschnitt W anliegt. Mittels eines an einem drehbaren Hebel 32 angebrachten Abschnitthalters 31 wird der Stangenabschnitt W von der anderen Seite her an das Schermesser 30 gedrückt, was dazu dient, den Stangenabschnitt W nach dem Abscheren vom Stangenmaterial am Schermesser 30 zu halten und dieses so gehalten zur ersten Umformstation 91 zu transportieren. Das Abscheren des Stangenabschnitts W vom Stangenmaterial und der Transport bzw. das Zuführen des abgescherten Stangenabschnitts zur ersten Umformstation 91 erfolgt durch eine Vorwärtsbewegung des Scherschlittens 2 mit dem Scherkopf 3 und dem Schermesser 30 in Richtung zur ersten Umformstation 91. Der drehbare Hebel 32 mit dem angebrachten Abschnitthalter 31 wird so betätigt, dass er nach dem Platzieren von einem abzuscherenden Stangenabschnitt W vor dem Schermesser 30 durch Vorschieben von Stangenmaterial den Stangenabschnitt W gegen das Schermesser 30 drückt und dieses dagegen gedrückt hält, bis der abgescherte Stangenabschnitt zur ersten Umformstation 91 zugeführt ist und von der dortigen Halteeinrichtung übernommen worden ist. All das in diesem Absatz Gesagte und wie es im Detail ausgeführt ist, ist dem Fachmann bekannt und in der DE 29 40 375 C2 ausführlich beschrieben, deren Offenbarung daher hiermit explizit durch Bezugnahme inkorporiert wird. Der Fachmann bedarf hierfür keiner weiteren Erläuterung.

Zur Vorwärts- und Rückwärtsbewegung des Scherschlittens 2 weist die Schervorrichtung 1 einen im Hub variablen Scherschlittenantrieb 4 auf. Der Scherschlittenantrieb 4 umfasst einen Hydraulikzylinder 41 und einen darin verschiebbaren Kolben 42, wobei der Kolben 42 über eine Kolbenstange 43 mit dem Scherschlitten 2 verbunden ist. Wie in Fig. 1 schematisch dargestellt, kommuniziert der Hydraulikzylinder 41 über eine hinter dem Kolben 42 mündende Hydraulikleitung 44 und eine vor dem Kolben 42 mündende Hydraulikleitung 45 mit einem Flüssigkeitsspeicher 46. Durch Hydraulikflüssigkeitszufuhr vom Flüssigkeitsspeicher 46 über die Hydraulikleitung 44 hinter den Kolben 42 und Hydraulikflüssigkeitsabfluss über die Hydraulikleitung 45 wird der Scherschlitten 2 vorwärts in Richtung zur ersten Umformstation 91 bewegt, während durch Hydraulikflüssigkeitszufuhr vom Flüssigkeitsspeicher 46 über die Hydraulikleitung 45 vor den Kolben 42 und Hydraulikflüssigkeitsabfluss über die Hydraulikleitung 44 der Scherschlitten 2 rückwärts von der ersten Umformstation 91 wegbewegt wird. Durch die Steuerung der Menge an zugeführter Hydraulikflüssigkeit kann der Hub des Scherschlittens 2 eingestellt werden.

Zu Steuerung sowohl des Scherschlittenantriebs 4 als auch der Schwenkwinkel-Verstelleinrichtung 6 weist die Umformmaschine 100 eine Steuereinheit 7 auf, die in Fig. 1 schematisch dargestellt ist. Die Steuereinheit 7 ermöglicht eine einfache Bedienung sowohl des Scherschlittenantriebs 4 als auch der Schwenkwinkel-Verstelleinrichtung 6, beispielsweise über eine Eingabeeinheit 70, mit der ein gewünschter Hub des Scherschlittens 2 und eine gewünschte Richtung der Vorwärtsbewegung des Scherschlittens 2 bzw. ein gewünschter Schwenkwinkel α des Scherschlittenlagers 5 oder direkt eine gewünschte Positionierung des Stangenabschnitts W bei der ersten Umformstation 91 eingebbar sind. Gewünschtenfalls kanne mittels der Steuereinheit 7 eine weitergehende Automatisierung vorgenommen werden.

Wie bereits erwähnt, ist der Scherschlitten 2 im Scherschlittenlager 5 in Längsrichtung vorwärts und rückwärts bewegbar gelagert. Dabei wird er durch die Gleitbüchse 50 geführt, die in einem Teilbereich des Scherschlittenlagers 5 zwischen Scherschlitten 2 und hohlzylindrischem Grundkörper 51 des Scherschlittenlagers 5 angeordnet ist, siehe insbesondere Fig. 1. Dadurch entspricht die Längsrichtung des Scherschlittens 2, in der dieser vorwärts und rückwärts bewegt wird, der Längsrichtung g des hohlzylindrischen Grundkörpers 51 des Scherschlittenlagers 5. Der Scherschlitten 2 weist die gleiche Schwenkachse A und den gleichen Schwenkwinkel α wie der hohlzylindrische Grundkörper 51 des Scherschlittenlagers 5 auf.

Die Schwenkachse A verläuft vorzugsweise parallel zur Längsrichtung des abzuscherenden Stangenabschnitts W und der Scherschlitten 2 ist vorzugsweise quer zur Längsrichtung des Stangenabschnitts W vorwärts und rückwärts bewegbar.

In Fig. 2 ist der ungeschwenkte Zustand des hohlzylindrischen Grundkörpers 51 des Scherschlittenlagers 5 dargestellt. Der Schwenkwinkel α ist 0. Die eingezeichnete Längsrichtung a entspricht der Mittelachse des hohlzylindrischen Grundkörpers 51 des Scherschlittenlagers 5 und der Längsrichtung und Mittelachse des Scherschlittens 2. Die Exzenterscheibe 64, der Exzenterarm 65 und der Verstellkragen 66 befinden sich in einer Mittelposition, was auch Detail 2B entnehmbar ist. Gemäss Detail 2A befindet sich der Kolben 42 fast am linken Rand des Hydraulikzylinders 41, d. h. fast in der am weitesten rückwärts bewegten Position. Das Schermesser 30 liegt gemäss Detail 2C am noch nicht abgescherten Stangenabschnitt W an, welcher auf der anderen Seite durch den Abschnitthalter 31 gehalten wird.

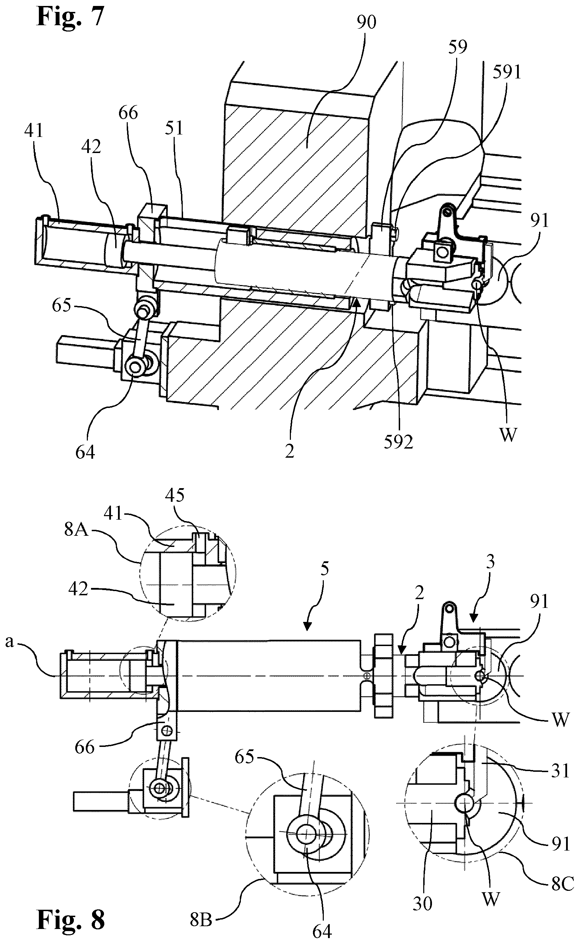

Durch eine Vorwärtsbewegung des Scherschlittens 2 in Längsrichtung a aufgrund eines Bewegens des Kolbens 42 im Hydraulikzylinder 41 in diese Richtung wird der Stangenabschnitt W vom Stangenmaterial abgeschert und zur ersten Umformstation 91 transportiert bzw. zugeführt. Es wird der in den Figuren 7 und 8 dargestellte Zustand erreicht, wo der Stangenabschnitt W gemäss Detail 8C bei der ersten Umformstation 91 zentral positioniert ist. Gemäss Detail 8A befindet sich der Kolben 42 nahe am rechten Rand des Hydraulikzylinders 41, wäre aber noch weiter nach rechts bewegbar. Die Details 8A und 8C zeigt einen mittleren Hub des Scherschlittens 2. Die Exzenterscheibe 64, der Exzenterarm 65 und der Verstellkragen 66 wurden nicht verstellt und befinden sich immer noch in der Mittelposition, siehe auch Detail 8B.

Die Figuren 9 und 10 zeigen eine andere Situation, in der der Stangenabschnitt W gemäss Detail 10C bei der ersten Umformstation 91 nach rechts oben versetzt positioniert ist. Dies wurde einerseits durch einen vergrösserten Hub erreicht, was in Detail 10A durch den im Vergleich zu Detail 8A weiter nach rechts bewegten Kolben 42 erkennbar ist. Der Kolben 42 verdeckt hier sogar einen Teil der Mündung der Hydraulikleitung 45 in den Hydraulikzylinder 41. Der um die Strecke h₁ vergrösserte Hub beträgt hier etwa 1,5 mm.

Die Versetzung des Stangenabschnitts W bei der ersten Umformstation 91 nach oben wurde gemäss Detail 10B durch ein Drehen der Antriebswelle 63 um einen Winkel γ im Gegenuhrzeigersinn erreicht, was die Exzenterscheibe 64 entsprechend mitgedreht und den Exzenterarm 65 und den Verstellkragen 66 nach unten gezogen hat, was seinerseits den hohlzylindrischen Grundkörper 51 des Scherschlittenlagers 5 bezüglich der Schwenkachse A um den Schwenkwinkel α nach unten geschwenkt hat. In der Folge wurde der Scherschlitten 2 links der Schwenkachse A ebenfalls um den Schwenkwinkel α nach unten und rechts der Schwenkachse A um den Schwenkwinkel α nach oben geschwenkt.

Die Figuren 11 und 12 zeigen wiederum eine andere Situation, in der der Stangenabschnitt W gemäss Detail 12C bei der ersten Umformstation 91 nach links unten versetzt positioniert ist. Dies wurde einerseits durch einen verkleinerten Hub erreicht, was in Detail 12A durch den im Vergleich zu Detail 8A weiter nach links bewegten Kolben 42 erkennbar ist. Der Kolben 42 ist weiter von der Mündung der Hydraulikleitung 45 in den Hydraulikzylinder 41 entfernt. Der um die Strecke h₂ verkleinerte Hub beträgt hier etwa 1,5 mm.

Die Versetzung des Stangenabschnitts W bei der ersten Umformstation 91 nach unten wurde gemäss Detail 12B durch ein Drehen der Antriebswelle 63 um einen Winkel γ im Uhrzeigersinn erreicht, was die Exzenterscheibe 64 entsprechend mitgedreht und den Exzenterarm 65 und den Verstellkragen 66 nach oben gestossen hat, was seinerseits den hohlzylindrischen Grundkörper 51 des Scherschlittenlagers 5 bezüglich der Schwenkachse A um den Schwenkwinkel α nach oben geschwenkt hat. In der Folge wurde der Scherschlitten 2 links der Schwenkachse A ebenfalls um den Schwenkwinkel α nach oben und rechts der Schwenkachse A um den Schwenkwinkel α nach unten geschwenkt.

## Patentansprüche

1. Umformmaschine (100) mit einer Umformstation (91) und mit einer Schervorrichtung (1) zum Abscheren eines Stangenabschnitts (W) von einem Stangenmaterial und Zuführen des abgescherten Stangenabschnitts (W) zur Umformstation (91), wobei die Schervorrichtung (1) einen vorwärts und rückwärts bewegbaren Scherschlitten (2) und ein am Scherschlitten (2) befestigtes Schermesser (30) umfasst, mit welchem Schermesser (30) in einer Vorwärtsbewegung des Scherschlittens (2) der Stangenabschnitt (W) vom Stangenmaterial abscherbar und zur Umformstation (91) zuführbar ist, **dadurch gekennzeichnet, dass** die Schervorrichtung (1) Mittel zur Verstellung des Hubs und der Richtung der Vorwärtsbewegung des Scherschlittens (2) umfasst.

2. Umformmaschine (100) nach Anspruch 1, **dadurch gekennzeichnet, dass** die Mittel zur Verstellung des Hubs und der Richtung der Vorwärtsbewegung des Scherschlittens (2) so ausgebildet sind, dass sie eine Verstellung des Hubs und der Richtung der Vorwärtsbewegung des Scherschlittens (2) im laufenden Betrieb der Umformmaschine (100) ermöglichen, wobei die Umformmaschine (100) vorzugsweise eine Steuereinheit (7) zur Steuerung der Mittel zur Verstellung des Hubs und der Richtung der Vorwärtsbewegung des Scherschlittens (2) umfasst.

3. Umformmaschine (100) nach Anspruch 1 oder 2, **dadurch gekennzeichnet, dass** die Schervorrichtung (1) einen im Hub variablen Scherschlittenantrieb (4) umfasst, mit dem der Scherschlitten (2) vorwärts und rückwärts bewegbar ist.

4. Umformmaschine (100) nach Anspruch 3, **dadurch gekennzeichnet, dass** der Scherschlittenantrieb (4) einen Hydraulikzylinder (41) und einen darin verschiebbaren Kolben (42) umfasst, wobei der Kolben (42) über eine Kolbenstange (43) mit dem Scherschlitten (2) verbunden ist.

5. Umformmaschine (100) nach einem der Ansprüche 1 bis 4, **dadurch gekennzeichnet, dass** zur Verstellung der Richtung der Vorwärtsbewegung des Scherschlittens (2) der Scherschlitten (2) um eine Schwenkachse (A) schwenkbar ist.

6. Umformmaschine (100) nach Anspruch 5, **dadurch gekennzeichnet, dass** der Scherschlitten (2) quer zu einer Längsrichtung des Stangenabschnitts (W) vorwärts und rückwärts bewegbar ist und die Schwenkachse (A) parallel zur Längsrichtung des Stangenabschnitts (W) verläuft.

7. Umformmaschine (100) nach Anspruch 5 oder 6, **dadurch gekennzeichnet, dass** der Scherschlitten (2) in einem Scherschlittenlager (5) geführt ist, das mindestens teilweise um die Schwenkachse (A) schwenkbar ist.

8. Umformmaschine (100) nach Anspruch 7, **dadurch gekennzeichnet, dass** die Mittel zur Verstellung des Hubs und der Richtung der Vorwärtsbewegung des Scherschlittens (2) eine Schwenkwinkel-Verstelleinrichtung (6) umfassen, die dezentral am Scherschlittenlager (5) ansetzt und bei Verstellung einen Schwenkwinkel (α) des Scherschlittenlagers (5) verstellt, wobei die Schwenkwinkel-Verstelleinrichtung (6) vorzugsweise einen Exzenter umfasst.

9. Umformmaschine (100) nach Anspruch 7 oder 8, **dadurch gekennzeichnet, dass** das Scherschlittenlager (5) über mindestens ein elastisch deformierbares Verbindungsteil (56, 57) mit mindestens einem ortsfesten Befestigungsteil (58, 59) verbunden ist.

10. Verfahren zum Abscheren eines Stangenabschnitts (W) von einem Stangenmaterial und Zuführen des abgescherten Stangenabschnitts (W) zu einer Umformstation (91) einer Umformmaschine (100), bei dem mittels einer Schervorrichtung (1), die einen vorwärts und rückwärts bewegbaren Scherschlitten (2) und ein am Scherschlitten (2) befestigtes Schermesser (30) umfasst, das Schermesser (30) in einer Vorwärtsbewegung des Scherschlittens (2) den Stangenabschnitt (W) vom Stangenmaterial abschert und zur Umformstation (91) zuführt, **dadurch gekennzeichnet, dass** zur Positionierung des abgescherten Stangenabschnitts (W) bei der Umformstation (91) der Hub und die Richtung der Vorwärtsbewegung des Scherschlittens (2) eingestellt werden.

## Claims

1. Forming machine (100) having a forming station (91) and having a cutting device (1) for cutting off a bar section (W) from a bar material and feeding the cut-off bar section (W) to the forming station (91), wherein the cutting device (1) comprises a cutting carriage (2) which is movable forwards and backwards and a cutting blade (30) which is attached to the cutting carriage (2), with which cutting blade (30), in a forward movement of the cutting carriage (2), the bar section (W) can be cut off from the bar material and fed to the forming station (91), **characterised in that** the cutting device (1) comprises means for adjusting the stroke and the direction of forward movement of the cutting carriage (2).

2. Forming machine (100) according to claim 1, **characterised in that** the means for adjusting the stroke and the direction of forward movement of the cutting carriage (2) are configured so that they enable the stroke and the direction of forward movement of the cutting carriage (2) to be adjusted during ongoing operation of the forming machine (100), the forming machine (100) preferably comprising a control unit (7) for controlling the means for adjusting the stroke and the direction of forward movement of the cutting carriage (2).

3. Forming machine (100) according to claim 1 or 2, **characterised in that** the cutting device (1) comprises a variable-stroke cutting carriage drive (4) with which the cutting carriage (2) is movable forwards and backwards.

4. Forming machine (100) according to claim 3, **characterised in that** the cutting carriage drive (4) comprises a hydraulic cylinder (41) and a piston (42) displaceable therein, the piston (42) being connected to the cutting carriage (2) via a piston rod (43).

5. Forming machine (100) according to any one of claims 1 to 4, **characterised in that** for adjustment of the direction of forward movement of the cutting carriage (2), the cutting carriage (2) is pivotable about a pivot axis (A).

6. Forming machine (100) according to claim 5, **characterised in that** the cutting carriage (2) is movable forwards and backwards transversely with respect to a longitudinal direction of the bar section (W) and the pivot axis (A) runs parallel to the longitudinal direction of the bar section (W).

7. Forming machine (100) according to claim 5 or 6, **characterised in that** the cutting carriage (2) is guided in a cutting carriage bearing (5) which is at least to some extent pivotable about the pivot axis (A).

8. Forming machine (100) according to claim 7, **characterised in that** the means for adjusting the stroke and the direction of forward movement of the cutting carriage (2) comprise a pivot angle adjusting device (6) which acts decentrally on the cutting carriage bearing (5) and, on adjustment, adjusts a pivot angle (α) of the cutting carriage bearing (5), the pivot angle adjusting device (6) preferably comprising an eccentric.

9. Forming machine (100) according to claim 7 or 8, **characterised in that** the cutting carriage bearing (5) is connected to at least one static attachment part (58, 59) by means of at least one resiliently deformable connecting part (56, 57).

10. Method for cutting off a bar section (W) from a bar material and feeding the cut-off bar section (W) to a forming station (91) of a forming machine (100), wherein by means of a cutting device (1), which comprises a cutting carriage (2) which is movable forwards and backwards and a cutting blade (30) which is attached to the cutting carriage (2), in a forward movement of the cutting carriage (2) the cutting blade (30) cuts off the bar section (W) from the bar material and feeds it to the forming station (91), **characterised in that** for positioning the cut-off bar section (W) in the forming station (91), the stroke and the direction of forward movement of the cutting carriage (2) are adjusted.

## Revendications

1. Machine de formage (100) comprenant un poste de formage (91) et comprenant un dispositif de cisaillement (1) destiné à trancher un tronçon de barre (W) dans un matériau en barre et à amener le tronçon de barre (W) tranché au poste de formage (91), le dispositif de cisaillement (1) comprenant un chariot de cisaillement (2), pouvant être déplacé vers l'avant et vers l'arrière, et une lame de cisaillement (30) fixée au chariot de cisaillement (2), laquelle lame de cisaillement (30) permet de trancher le tronçon de barre (W) dans le matériau de barre et de l'amener au poste de formage (91), au cours d'un mouvement vers l'avant du chariot de cisaillement (2), **caractérisée en ce que** le dispositif de cisaillement (1) comprend des moyens pour régler la course et la direction du mouvement vers l'avant du chariot de cisaillement (2).

2. Machine de formage (100) selon la revendication 1, **caractérisée en ce que** les moyens de réglage de la course et de la direction du mouvement vers l'avant du chariot de cisaillement (2) sont conçus de manière à permettre un réglage de la course et de la direction du mouvement vers l'avant du chariot de cisaillement (2) au cours du fonctionnement de la machine de formage (100), la machine de formage (100) comprenant de préférence une unité de commande (7) pour commander les moyens de réglage de la course et de la direction du mouvement vers l'avant du chariot de cisaillement (2).

3. Machine de formage (100) selon la revendication 1 ou 2, **caractérisée en ce que** le dispositif de cisaillement (1) comprend un entraînement de chariot de cisaillement (4) à course variable qui permet de déplacer le chariot de cisaillement (2) vers l'avant et vers l'arrière.

4. Machine de formage (100) selon la revendication 3, **caractérisée en ce que** l'entraînement de chariot de cisaillement (4) comprend un vérin hydraulique (41) et un piston (42) pouvant coulisser dans celui-ci, le piston (42) étant relié au chariot de cisaillement (2) par une tige de piston (43).

5. Machine de formage (100) selon une des revendications 1 à 4, **caractérisée en ce que** pour le réglage de la direction du mouvement vers l'avant du chariot de cisaillement (2), le chariot de cisaillement (2) peut être pivoté autour d'un axe de pivotement (A).

6. Machine de formage (100) selon la revendication 5, **caractérisée en ce que** le chariot de cisaillement (2) peut être déplacé vers l'avant et vers l'arrière, transversalement à une direction du tronçon de barre (W), et l'axe de pivotement (A) s'étend parallèlement à la direction longitudinale du tronçon de barre (W).

7. Machine de formage (100) selon la revendication 5 ou 6, **caractérisée en ce que** le chariot de cisaillement (2) est guidé dans un support de chariot de cisaillement (5) qui peut être pivoté au moins en partie autour de l'axe de pivotement (A).

8. Machine de formage (100) selon la revendication 7, **caractérisée en ce que** les moyens de réglage de la course et de la direction du mouvement vers l'avant du chariot de cisaillement (2) comprennent un dispositif de réglage d'angle de pivotement (6) qui agit de manière excentrée sur le support de chariot de cisaillement (5) et, en cas de réglage, modifie un angle de pivotement (α) du support de chariot de cisaillement (5), le dispositif de réglage d'angle de pivotement (6) comprenant de préférence un excentrique.

9. Machine de formage (100) selon la revendication 7 ou 8, **caractérisée en ce que** le support de chariot de cisaillement (5) est relié par au moins un élément de liaison (56, 57) élastiquement déformable à au moins un élément de fixation (58, 59) fixe.

10. Procédé de cisaillement d'un tronçon de barre (W) dans un matériau de barre et d'amenée du tronçon de barre (W) tranché vers un poste de formage (91) d'une machine de formage (100), selon lequel un dispositif de cisaillement (1), comprenant un chariot de cisaillement (2), pouvant être déplacé vers l'avant et vers l'arrière, et une lame de cisaillement (30) fixée au chariot de cisaillement (2), fait en sorte que la lame de cisaillement (30) tranche le tronçon de barre (W) dans le matériau de barre, au cours d'un mouvement vers l'avant du chariot de cisaillement (2), et l'amène au poste de formage (91), **caractérisé en ce que** pour le positionnement du tronçon de barre (W) tranché au poste de formage (91), la course et la direction du mouvement vers l'avant du chariot de cisaillement (2) sont réglées.
